# EUROPÄISCHE PATENTSCHRIFT

(11) **EP 2 070 447 B1**
(45) Veröffentlichungstag und Bekanntmachung des Hinweises auf die Patenterteilung: **26.10.2011**
(21) Anmeldenummer: 08170043.7
(22) Anmeldetag: 27.11.2008
(51) Int. Cl.: A47C 20/04, F16H 25/20, H02K 7/06, A47C 20/08

(54) **Elektromotorischer Möbel-Doppelantrieb und Schalteranordnung**
Electric motor furniture double drive and switch arrangement
Entraînement double de meuble électromotorisé et agencement de commutateur

(30) Priorität: 13.12.2007 DE 202007017535 U
(43) Veröffentlichungstag der Anmeldung: 17.06.2009
(73) Patentinhaber: Dewert Antriebs- und Systemtechnik GmbH, 32278 Kirchlengern (DE)
(72) Erfinder: Heinrichs, Andreas, 32602, Vlotho (DE)
(74) Vertreter: Dantz, Jan Henning

(56) Entgegenhaltungen:
- EP-A- 1 205 687
- WO-A-2004/028305
- WO-A-2004/032684
- WO-A-2004/032687
- DE-U1- 7 616 336
- DE-U1- 8 903 603
- DE-U1- 20 311 366

## Beschreibung

Die Erfindung bezieht sich auf einen elektromotorischen Möbel-Doppelantrieb und Schalteranordnung mit wenigstens einem Antriebsmotor, gemäß dem Oberbegriff des Anspruchs 1. So ein Mobel-Doppelantrieb ist z.B. aus DE 20311 366 U bekannt.

Die in Rede stehenden Möbel-Doppelantriebe sind in zwei Ausführungen bekannt. Gemäß einer ersten Ausführungsform ist der Doppelantrieb mit zwei Antriebsmotoren ausgestattet, die seitlich am Gehäuse in Motortöpfen angeordnet sind. Der Möbel-Doppelantrieb, nachfolgende nur Doppelantrieb genannt, ist mit zwei Drehzahlreduziergetrieben ausgestattet, die antriebstechnisch mit dem jeweils zugehörigen Antriebsmotor gekoppelt sind. Mit dem Abtriebsglied jedes Drehzahlreduziergetriebes ist eine Spindel fest verbunden, auf die eine gegen Drehung gesicherte Spindelmutter aufgesetzt ist. Diese Spindelmutter bildet das Abtriebsglied jedes Antriebszuges des Doppelantriebes. Beispielsweise über ein fest auf die Spindelmutter aufgesetztes Abtriebselement wird ein daran angeschlossenes Möbelbauteil verstellt.

Gemäß einer zweiten Ausführungsform ist der Doppelantrieb mit einem Antriebsmotor und einem Drehzahlreduziergetriebe ausgestattet. Dieses Drehzahlreduziergetriebe ist so ausgelegt, dass eine gegen Drehung gesicherte Spindel in ihrer Längsrichtung verfahrbar ist. Diese Spindel bildet dann das Abtriebsglied des Doppelantriebes. Die beiden Stirnflächen der Spindel und die darauf aufgesetzten Abtriebselemente können je nach der Bewegungsrichtung der Spindel mit zu verstellenden Bauteilen in einer Antriebsverbindung stehen.

Gemäß einer weiteren Ausführungsfonn ist der Doppelantrieb aus zwei einzelnen Antrieben gebildet, wobei jeweils ein Elektromotor mit einem Drehzahlreduziergetriebe und einem Abtriebselement in jeweils einem Gehäuse angeordnet ist und wobei zwei Gehäuse entweder direkt miteinander verbunden sind oder wobei zwei Gehäuse durch mindestens eine zwischen den Gehäusen angeordnetes Verbindungselement miteinander verbunden sind.

Die Endschalter bzw. der Endschalter sind in eine sogenannte Endschalterleiste mit U-förmigem Querschnitt eingesetzt. Der Mittelschenkel dieser Endschalterleiste ist mit einer Lochreihe versehen, so dass die Endschalter in verschiedenen Stellungen in den Endschalterleisten platziert werden können. Dabei steuert der jeweilige Endschalter den Motor, indem der Motorstromkreis beispielsweise bei Erreichen des Abtriebselementes in einer Mittenposition oder in einer Endposition durch den Schaltkontakt des Endschalters ausgeschaltet wird.

Diese Ausführung hat sich an sich bewährt, nachteilig ist jedoch, dass zur Verstellung der Endschalter das Gehäuse geöffnet werden muss, damit die Endschalter zugänglich sind. Die Stellungen der Endschalter sind jedoch von dem erforderlichen Verstellweg und von dem Verstellbereich des zu verstellenden Möbelbauteiles abhängig. Diese Art der Verstellung der Endschalter hat sich zwar bewährt, wird jedoch von den Anwendern von Doppelantrieben als unbefriedigend empfunden, da nicht erkennbar ist, wie die Endstellungen der Abtriebsglieder eines Möbelantriebes einzustellen sind.

Der Erfindung liegt die Aufgabe zugrunde, einen nenartigen elektromotorischen Möbel-Doppelantrieb der eingangs näher beschriebenen Art so auszubilden, dass die Verstellung des Endschalters bzw. der Endschalter ohne Öffnen des Gehäuses möglich ist, und dass insbesondere die Möglichkeit der Verstellung von außen sichtbar ist.

Die gestellte Aufgabe wird gelöst, durch einen electromotorischen Möbel-Doppelantrieb mit den in Anspruch 1 angegebenen Merkmalen.

Vorfeilhafte Weiterbildungen der Erfindung sind Gegenstand der abhängigen Ansprüche.

Anhand der beiliegenden Zeichnungen wird die Erfindung noch näher erläutert.

Es zeigen:
- Figur 1: ein Ausführungsbeispiel eines erfindungsgemäßen Möbel- Doppelantriebes, jedoch in vereinfachter Darstellung
- Figur 2: eine Teilansicht des Gehäuses des Möbel-Doppelantriebes und
- Figur 3: eine Einzelheit, die Endschalteraufnahme in perspektivischer Dar- stellung zeigend.

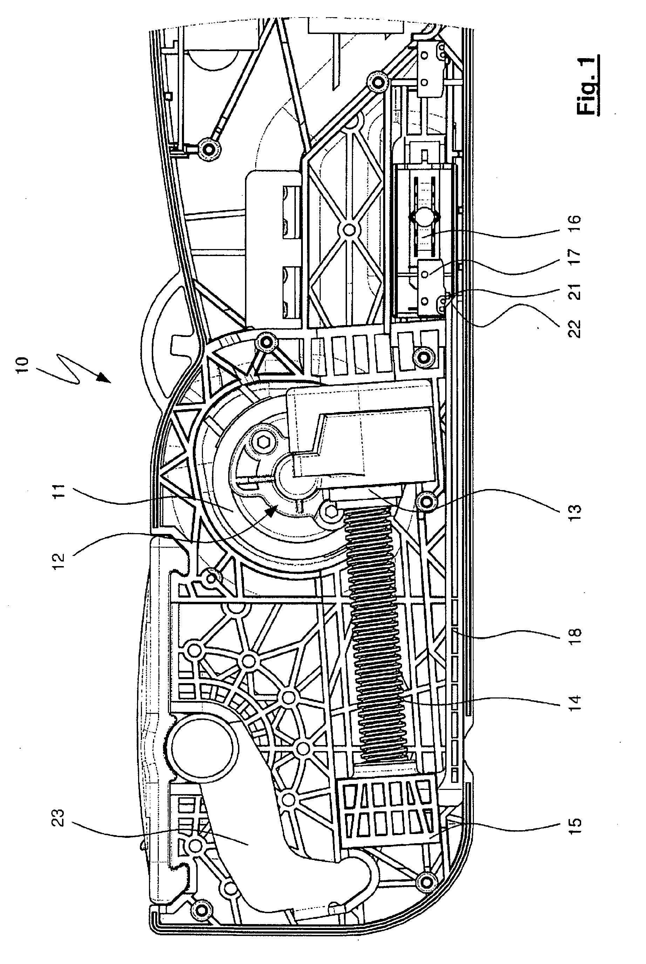

Der in der Figur 1 dargestellte Möbel-Doppelantrieb 10 ist mit einem elektromotorischen Antriebsmotor 11 und einem Drehzahlreduziergetriebe 12 ausgestattet. Dieses Drehzahlreduziergetriebe 12 besteht aus einer Schnecke und einem damit kämmenden Schneckenrad, welches mit einer Antriebsmutter 13 fest verbunden ist oder welches mit der Antriebsmutter 13 ein einstückiges Formteil bildet. Dabei ist die Spindel 14 drehbar in die Innengewindebohrung des Schneckenrades eingesetzt und fest mit dem Schieber 15 verbunden. Der Schieber 15 ist wiederum durch Führungsstege drehfest im Gehäuse in Längsrichtung der Spindel 14 verschiebbar geführt. Es ergibt sich aus der Figur 1, dass sich bei eingeschaltetem Antriebsmotor die gegen Drehung gesicherte Spindel 14 in ihrer Längsrichtung verschiebt, wobei die Verschieberichtung von der Drehrichtung des Schneckenrades abhängig ist.

Im dargestellten Ausführungsbeispiel ist auf das dem Drehzahlreduziergetriebe 12 abgewandte Ende der Spindel 14 ein klotzartiger Schieber 15 fest aufgesetzt, der als Hohlkörper ausgebildet sein kann. Dieser klotzartige Schieber 15 wirkt mit einem Anlenkhebel 16 zusammen, der drehfest auf eine Welle eines zu verstellenden Möbelbauteiles aufgesetzt ist. Dabei bilden der Schieber 15 und/oder die Spindel 14 das sich linear bewegende Abtriebeselement. In kinematischer Umkehrung der Ausführung gemäß der Figur 1 sieht eine andere Ausführungsform eine Spindel 14 vor, welche fest mit dem Schneckenrad verbunden ist oder ein einstückiges Formteil mit ihr bildet. Dabei ist auf die Gewindegänge der Spindel eine gegen Drehung gesicherte Antriebsmutter 13 aufgesetzt, welche mit dem Schieber 15 verbunden ist. Gemäß dieser nicht näher gezeigten Ausführungsform bildet die Antriebsmutter 13 und/oder der Schieber 15 das in Längsrichtung der Spindel 14 verfahrende Abtriebselement, sobald der elektrische Antriebsmotor 11 das Schneckenrad antreibt.

In das Innere des Möbelantriebes 10 ist benachbart einer, bezogen auf die Montagestellung, senkrechten Wand des Gehäuses eine einseitig offene Endschalteraufnahme 16 angeordnet, die in Richtung der Wandung des Gehäuses offen ist. In diese Endschalteraufnahme 16 ist ein Endschalter 17 eingesetzt. Dieser Endschalter 17 ist in bekannter Weise mit Stößeln 21 ausgestattet, um den Antriebsmotor 11 zu schalten. Im Abstand zur Spindel 14 ist eine Schleppstange 18 vorgesehen, die an der dem Endschalter 17 zugewandten Ende eine Schräg- bzw. Anlauffläche 22 aufweist. Die schräg zur Bewegungsrichtung der Schleppstange geneigte Anlauffläche 22 nähert sich dem Endschalter 17 und dem Stößel 21, sobald der Antriebsmotor 11 das Abtriebselement 14, 15 mit der daran angesetzten Schleppstange 18 in einer ersten Bewegungsrichtung verfährt, die sich gemäß der Figur 1 nach rechts erstreckt, bis dass die schräg geneigte Anlauffläche 22 den Stößel 21 betätigt und einen mit dem Stößel 21 gekoppelten Schaltkontakt im Inneren des Endschalters 17 derart schaltet, dass der Stromkreis des Antriebsmotors 11 unterbrochen ist und der Motor 11 abgeschaltet wird.

Die gemäß der Figur 1 dargestellte Endschalteraufnahme 16 ist als Einstellvorrichtung 16 ausgebildet, welche fest mit dem Endschalter 17 verbunden ist. Wie die weiteren Figuren noch beschreiben weist die Wandung des Gehäuses im Bereich der Einstellvorrichtung 16 einen Ausschnitt 20 in Form eines Schlitzes 20 auf. Ferner weist der Endschalter 17 eine Schaltschwelle auf, sobald der Stößel 21 durch die Anlauffläche 22 ein vorbestimmtes Maß betätigt wurde. Durch Verschieben der Einstellvorrichtung 16 innerhalb des Ausschnittes 20 verändert sich der Abstand zwischen der Anlauffläche 22 und dem der Schaltschwelle auslösenden Stößel 21, so dass die Schaltschwelle des Endschalters 17 gegenüber dem im Gehäuse fixierten Drehzahlreduziergetriebe 12 in unterschiedlichen Abständen durch den in dem Ausschnitt 20 einrastenden Federsteg 19 festsetzbar ist.

Im dargestellten Ausführungsbeispiel ist die Schleppstange 18 an dem klotzartigen Schieber 15 durch einen nicht näher erläuterten Mitnehmer festgelegt. Sie folgt demzufolge der Bewegung der als Abtriebselement ausgebildeten Spindel 14. Die Figur 1 zeigt, dass der Endschalter 17 so gesetzt ist, dass bei einem bestimmten Schwenkwinkel des Anlenkhebels 16 der Motor abgeschaltet wird.

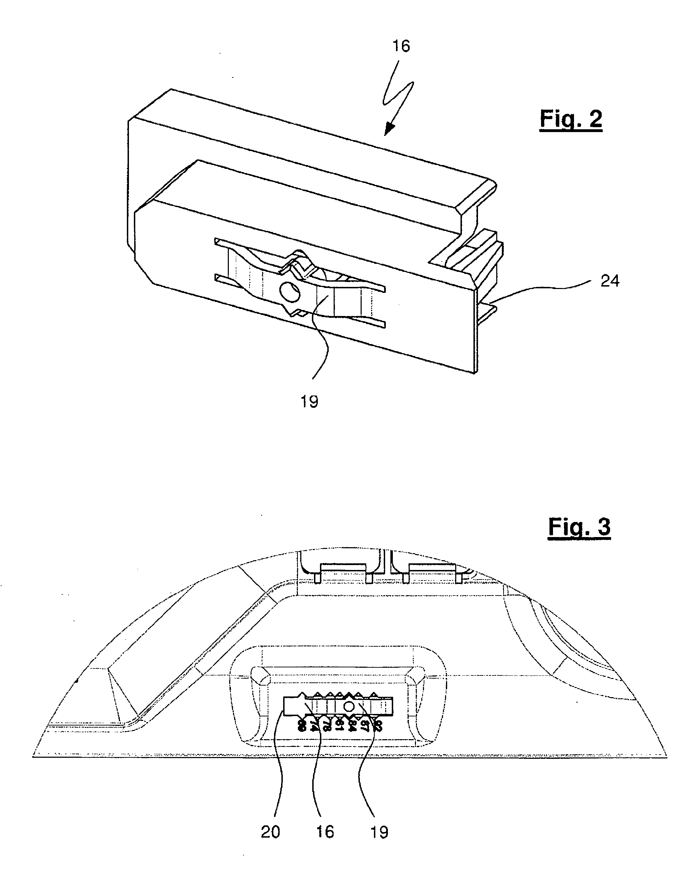

Die Figur 2 zeigt die Endschalteraufnahme 16 als Einzelheit. Der darin eingesetzte Endschalter 17 ist nicht sichtbar. Die Figur 2 zeigt jedoch deutlich, dass die Endschalteraufnahme 16 an der der Gehäusewand zugewandten Seite mit einem Federsteg 19 versehen ist, der durch Krafteinwirkung, beispielsweise durch manuelle Krafteinwirkung, von außen so verformt werden kann, dass er innerhalb des Gehäuses liegt. An beiden Längsseiten ist der Federsteg 19 mit einer pfeilförmigen Spitze versehen.

Die Figur 3 zeigt, dass das Gehäuse mit einem Schlitz 20 versehen ist, in dem der Federsteg 19 verschiebbar geführt ist. Die den Schlitz 20 begrenzenden Randbereiche des Gehäuses sind mit mehreren dreieckförmigen Profilierungen versehen, in die wahlweise die pfeilfönnige Spitze des Federsteges 19 eingreift. Das Gehäuse ist mit einer den dreieckförmigen Profilierungen entsprechenden Skala versehen. Diese zeigt, dass im dargestellten Ausführungsbeispiel der lineare Verstellweg der Spindel 14 um 23 mm vergrößert oder verkleinert werden kann. Für den Anwender ist deshalb sofort erkennbar, auf welchen Wert er nach Betätigen des Federsteges 19 den Weg der Spindel 14 verändern kann.

Im Gegensatz zu der dargestellten Ausführung kann die Schleppstange 18 auch direkt an der Spindel 14 befestigt sein. Entgegen dieser Darstellung könnte die Schleppstange 18 auch als Teleskop ausgebildet sein, wobei das ausfahrbare Rohr dann der Bewegung der Spindel 14 folgt.

Die Figur 2 zeigt außerdem, das die Endschalteraufnahme 16 an der dem Federsteg 19 abgewandten Seite mit einer Führungsnut 24 versehen ist, in die die Schleppstange 19 zur Führung eingreift.

Die Erfindung ist nicht auf dargestellte Ausführungsbeispiel beschränkt. Wesentlich ist, dass der Endschalter 17 oder die Endschalter jeweils in einer Endschalteraufnahme 16 festgelegt oder eingesetzt ist, die mit einem Federsteg 19 oder einer Federzunge versehen ist, die von außen so weit verfonnt werden kann, dass die Endschalteraufnahme 16 in Längsrichtung der Spindel 14 bewegbar ist.

## Patentansprüche

1. Elektromotorischer Möbel-Doppelantrieb (10), der mit wenigstens einem Antriebsmotor (11) versehen ist, der mit einem Drehzahlreduziergetriebe (12) antriebstechnisch gekoppelt ist, und bei dem mittels des Drehzahlreduziergetriebes ein gegen Drehung gesichertes Abtriebselement (14, 15) in seiner Längsrichtung verfahrbar ist und bei dem zumindest das Drehzahlreduziergetriebe (12) und das Abtriebselement (14, 15) in einem Gehäuse angeordnet sind und bei dem die Endstellungen des Abtriebselements (14, 15) durch wenigstens einen Endschalter (17) begrenzt sind, wobei das Abtriebselement (14, 15) oder das Gehäuse eine Endschalteraufnahme 16) aufweist, mittels dem die Position der Schaltschwelle des mindestens einen Endschalters (17) von außerhalb des Gehäuses einstellbar ist, **dadurch gekennzeichnet, dass** der mindestens ein Endschalter (17) in eine als Einstellvorrichtung ausgebildete, gegenüber dem Drehzahlreduziergetriebe (12) in unterschiedlichen Abständen festsetzbare, gehäuseartigen Endschalteraufnahme (16) eingesetzt ist, dass die zugeordnete Wandung des Gehäuses im an die Endschalteraufnahme (16) angrenzenden Bereich mit einem öffnungsbildenden Schlitz (20) versehen ist, dass die den Schlitz (20) in der Wandung des Gehäuses begrenzenden Randbereiche Profilierungen aufweisen und dass die Endschalteraumahme (16) mit wenigstens einer Gegenprofilierung versehen ist, und das die Endschalteraufnahme (16) einen Federsteg (19) oder eine Federzunge aufweist, der bzw. die mit entsprechenden Gegenprofilierungen der den Schlitz (20) begrenzenden Randbereiche versehen ist.

2. Elektromotorischer Möbel-Doppelantrieb nach Anspruch 1, **dadurch gekennzeichnet, dass** die der Endschalteraufnahme (16) zugeordnete Wandung des Gehäuses einen Schlitz (20) aufweist, durch den der Federsteg bzw. die Federzunge der Endschalteraufnahme durchführbar ist.

3. Elektromotorischer Möbel-Doppelantrieb nach Anspruch 1 oder 2, **dadurch gekennzeichnet, dass** die Einstellvorrichtung (16) mit der Schaltschwelle des mindestens einen Endschalters (17) derart gekoppelt ist, dass die jeweilige Schaltschwelle des mindestens einen Endschalters (17) gegenüber dem Drehzahlreduziergetriebe (12) in unterschiedlichen Abständen festsetzbar ist.

4. Elektromotorischer Möbel-Doppelantrieb nach einem der Ansprüche 1 bis 4, **dadurch gekennzeichnet, dass** jede Endschalteraufnahme (16) in einer an die Wandung des Gehäuses angrenzenden Führung verschiebbar geführt ist.

5. Elektromotorischer Möbel-Doppelantrieb nach einem oder mehreren der vorstehenden Ansprüche, **dadurch gekennzeichnet, dass** innerhalb des Gehäuses des Möbel-Doppelantriebes (10) mindestens eine der linearen Bewegung der Spindel (14) folgende Schleppstange (18) vorgesehen ist.

6. Elektromotorischer Möbel-Doppelantrieb nach Anspruch 5, **dadurch gekennzeichnet, dass** die Schleppstange (18) als Flachstab mit wenigstens einer Längsnut versehen ist, in die ein Führungssteg der Endschalteraufnahme (16) eingreift.

7. Elektromotorischer Möbel-Doppelantrieb nach einem oder mehreren der vorstehenden Ansprüche, **dadurch gekennzeichnet, dass** auf das dem Drehzahlreduziergetriebe (12) abgewandte Ende der Spindel (14) ein klotzartiger Schieber (15) fest aufgesetzt ist.

8. Elektromotorischer Möbel-Doppelantrieb nach Anspruch 7, **dadurch gekennzeichnet, dass** der klotzartige Schieber (15) als Hohlkörper ausgebildet ist.

9. Elektromotorischer Möbel-Doppelantrieb nach einem oder mehreren der vorstehenden Ansprüche, **dadurch gekennzeichnet, dass** die Schleppstange (18) am klotzartigen Schieber (15) festgelegt ist und im Abstand zu den beiden zugeordneten Wandungen des Gehäuses steht.

10. Elektromotorischer Möbel-Doppelantrieb nach einem oder mehreren der vorstehenden Ansprüche, **dadurch gekennzeichnet, dass** die Schleppstange (18) an dem dem Drehzahlreduziergetriebe (12) abgewandten Ende der Spindel (14) festgelegt ist.

11. Elektromotorischer Möbel-Doppelantrieb nach einem oder mehreren der vorstehenden Ansprüche, **dadurch gekennzeichnet, dass** außenseitig am Gehäuse seitlich neben dem Schlitz eine Skala angeordnet ist.

12. Elektromotorischer Möbel-Doppelantrieb nach einem oder mehreren der vorstehenden Ansprüche, **dadurch gekennzeichnet, dass** das Abtriebselement (14, 15) und/oder das Gehäuse mit einer Einstellvorrichtung (16) ausgestattet ist, die vorzugsweise durch eine verschiebbare Endschalteraufnahme gebildet ist.

13. Elektromotorischer Möbel-Doppelantrieb nach einem oder mehreren der vorstehenden Ansprüche, **dadurch gekennzeichnet, dass** die Einstellvorrichtung (16) von der Außenseite des Gehäuses frei zugänglich ist und/oder durch ein Abdeckelement abgedeckt ist.

14. Elektromotorischer Möbel-Doppelantrieb nach einem oder mehreren der vorstehenden Ansprüche, **dadurch gekennzeichnet, dass** der Abstand zwischen der Anlauffläche und dem den Elektromotor in der vollständig betätigten Stellung bzw. in der vollständig ausgefahrenen Stellung des Möbelbauteiles abschaltet, einstellbar ist.

15. Elektromotorischer Möbel-Doppelantrieb nach einem oder mehreren der vorstehenden Ansprüche, **dadurch gekennzeichnet, dass** mindestens ein Endschalter (17) mit der Einstellvorrichtung (16) gekoppelt oder fest mit dieser verbunden ist.

16. Elektromotorischer Möbel-Doppelantrieb nach Anspruch 15, **dadurch gekennzeichnet, dass** der Stößel des mindestens einen Endschalters (17) mit der Einstellvorrichtung (16) gekoppelt oder fest mit dieser verbunden ist.

17. Elektromotorischer Möbel-Doppelantrieb nach einem oder mehreren der vorstehenden Ansprüche, **dadurch gekennzeichnet, dass** die Anlauffläche zur Betätigung des mindestens einen Endschalters (17) mit mindestens einer Einstellvorrichtung (16) gekoppelt oder fest mit ihr verbunden ist.

18. Elektromotorischer Möbel-Doppelantrieb nach einem oder mehreren der vorstehenden Ansprüche, **dadurch gekennzeichnet, dass** das linear bewegliche Abtriebselement (14, 15) mit mindestens einer Einstellvorrichtung (16) gekoppelt oder fest mit dieser verbunden ist.

19. Elektromotorischer Möbel-Doppelantrieb nach einem oder mehreren der vorstehenden Ansprüche, **dadurch gekennzeichnet, dass** die Einstellvorrichtung (16) durch eine Endschalteraufnahme mit formschlüssig einrastenden Stellungen gebildet ist.

20. Elektromotorischer Möbel-Doppelantrieb nach einem oder mehreren der vorstehenden Ansprüche, **dadurch gekennzeichnet, dass** die Einstellvorrichtung (16) an oder in dem Abtriebselement (14, 15) angesetzt, daran eingesetzt oder damit gekoppelt ist.

21. Elektromotorischer Möbel-Doppelantrieb nach einem oder mehreren der vorstehenden Ansprüche, **dadurch gekennzeichnet, dass** der mindestens eine Endschalter (17) an einer Leiterplatte angeordnet ist.

22. Elektromotorischer Möbel-Doppelantrieb nach Anspruch 22, **dadurch gekennzeichnet, dass** der mindestens eine auf der Leiterplatte angeordnete Endschalter (17) mit wenigstens einer Einstellvorrichtung (16) gekoppelt oder mit dieser fest verbunden ist.

## Claims

1. Electromotive double furniture drive (10) which is provided with at least one drive motor (11), which is coupled for drive action to a speed-reduction gear mechanism (12), and in the case of which, by means of the speed-reduction gear mechanism, an output element (14, 15) which is secured against rotation can be displaced in its longitudinal direction, and in the case of which at least the speed-reduction gear mechanism (12) and the output element (14, 15) are arranged in a housing, and in the case of which the end positions of the output element (14, 15) are limited by at least one limit switch (17), wherein the output element (14, 15) or the housing has a limit-switch holder (16), by means of which it is possible to adjust the position of the switching threshold of the at least one limit switch (17) from outside the housing, **characterized in that** the at least one limit switch (17) is inserted into a housing-like limit-switch holder (16) which is designed as an adjusting device and can be secured at different spacings in relation to the speed-reduction gear mechanism (12), **in that** the associated wall of the housing, in the region adjacent to the limit-switch holder (16), is provided with an opening-forming slot (20), **in that** the peripheral regions bounding the slot (20) in the wall of the housing have profiling, and that the limit-switch holder (16) is provided with at least one mating profiling, and **in that** the limit-switch holder (16) has a resilient crosspiece (19) or a resilient tongue, which is provided with corresponding mating profiling in respect of the peripheral regions bounding the slot (20).

2. Electromotive double furniture drive according to Claim 1, **characterized in that** the wall of the housing which is assigned to the limit-switch holder (16) has a slot through which the resilient crosspiece or the resilient tongue of the limit-switch holder can be guided.

3. Electromotive double furniture drive according to Claim 1 or 2, **characterized in that** the adjusting device (16) is coupled to the switching threshold of the at least one limit switch (17) such that the respective switching threshold of the at least one limit switch (17) can be secured at different spacings in relation to the speed-reduction gear mechanism (12).

4. Electromotive double furniture drive according to one of Claims 1 to 3, **characterized in that** each limit-switch holder (16) is guided such that it can be displaced in a guide adjacent to the wall of the housing.

5. Electromotive double furniture drive according to one or more of the preceding claims, **characterized in that** at least one pull rod (18), which follows the linear movement of the spindle (14), is provided within the housing of the double furniture drive (10).

6. Electromotive double furniture drive according to Claim 5, **characterized in that** the pull rod (18), as a flat bar, is provided with at least one longitudinal groove, in which engages a guiding crosspiece of the limit-switch holder (16).

7. Electromotive double furniture drive according to one or more of the preceding claims, **characterized in that** a block-like slide (15) is fixed on that end of the spindle (14) which is directed away from the speed-reduction gear mechanism (12).

8. Electromotive double furniture drive according to Claim 7, **characterized in that** the block-like slide (15) is designed as a hollow body.

9. Electromotive double furniture drive according to one or more of the preceding claims, **characterized in that** the pull rod (18) is secured on the block-like slide (15) and is spaced apart from the two associated walls of the housing.

10. Electromotive double furniture drive according to one or more of the preceding claims, **characterized in that** the pull rod (18) is secured at that end of the spindle (14) which is directed away from the speed-reduction gear mechanism (12).

11. Electromotive double furniture drive according to one or more of the preceding claims, **characterized in that** a scale is arranged on the outside of the housing, laterally alongside the slot.

12. Electromotive double furniture drive according to one or more of the preceding claims, **characterized in that** the output element (14, 15) and/or the housing are/is provided with an adjusting device (16) which is formed preferably by a displaceable limit-switch holder.

13. Electromotive double furniture drive according to one or more of the preceding claims, **characterized in that** the adjusting device (16) is freely accessible from the outside of the housing and/or is covered by a covering element.

14. Electromotive double furniture drive according to one or more of the preceding claims, **characterized in that** it is possible to adjust the spacing between the run-on surface and the limit switch which switches off the electric motor in the fully actuated position and/or in the fully extended position of the furniture component.

15. Electromotive double furniture drive according to one or more of the preceding claims, **characterized in that** at least one limit switch (17) is coupled, or fixed, to the adjusting device (16).

16. Electromotive double furniture drive according to Claim 15, **characterized in that** the push rod of the at least one limit switch (17) is coupled, or fixed, to the adjusting device (16).

17. Electromotive double furniture drive according to one or more of the preceding claims, **characterized in that** the run-on surface, for actuating the at least one limit switch (17), is coupled, or fixed, to at least one adjusting device (16).

18. Electromotive double furniture drive according to one or more of the preceding claims, **characterized in that** the linearly movable output element (14, 15) is coupled, or fixed, to at least one adjusting device (16).

19. Electromotive double furniture drive according to one or more of the preceding claims, **characterized in that** the adjusting device (16) is formed by a limit-switch holder with position locations which exhibit form-fitting latching action.

20. Electromotive double furniture drive according to one or more of the preceding claims, **characterized in that** the adjusting device (16) is fitted on or in the output element (14, 15), inserted thereon or coupled thereto.

21. Electromotive double furniture drive according to one or more of the preceding claims, **characterized in that** the at least one limit switch (17) is arranged on a printed circuit board.

22. Electromotive double furniture drive according to Claim 21, **characterized in that** the at least one limit switch (17) arranged on the printed circuit board is coupled, or fixed, to at least one adjusting device (16).

## Revendications

1. Entraînement double de meuble électromotorisé (10), lequel est muni d'au moins un moteur de commande (11), lequel est couplé par technique d'entraînement avec un réducteur du nombre de tours (12), et avec lequel un élément mené (14, 15) protégé contre la rotation peut être déplacé dans sa direction longitudinale à l'aide du réducteur du nombre de tours et avec lequel au moins le réducteur du nombre de tours (12) et l'élément mené (14, 15) sont disposés dans un boîtier et avec lequel les positions finales de l'élément mené (14, 15) sont limitées grâce à au moins un interrupteur de fin de course (17), l'élément mené (14, 15) ou le boîtier présentant un logement d'interrupteur de fin de course (16) à l'aide duquel on peut régler la position du seuil de commutation de ce ou ces interrupteur(s) de fin de course (17) depuis l'extérieur du boîtier, **caractérisé en ce que** ce ou ces interrupteur(s) de fin de course (17) est/sont placé(s) dans un logement d'interrupteur de fin de course (16) semblable à un boîtier réalisé en tant que dispositif de réglage pouvant être fixé à différentes distances par rapport au réducteur du nombre de tours (12), **en ce que** la paroi associée du boîtier est munie, dans la zone qui jouxte le logement d'interrupteur de fin de course (16), d'une fente (20) formant une ouverture, **en ce que** les zones du bord délimitant la fente (20) dans la paroi du boîtier présentent des profilages et **en ce que** le logement d'interrupteur de fin de course (16) est muni au moins d'un contre profilage, et **en ce que** le logement d'interrupteur de fin de course (16) présente une barrette à ressort (19) ou une lame flexible, laquelle est munie de contre profilages correspondants des zones du bord délimitant la fente (20).

2. Entraînement double de meuble électromotorisé selon la revendication 1, **caractérisé en ce que** la paroi du boîtier associée au logement d'interrupteur de fin de course (16) présente une fente (20) à travers laquelle on peut faire passer la barrette à ressort et/ou la lame flexible du logement d'interrupteur de fin de course.

3. Entraînement double de meuble électromotorisé selon la revendication 1 ou 2, **caractérisé en ce que** le dispositif de réglage (16) est couplé avec le seuil de commutation de ce ou ces interrupteur(s) de fin de course (17) de manière à ce que le seuil de commutation respectif de ce ou ces interrupteur(s) de fin de course (17) peut/peuvent être fixé(s) à différentes distances par rapport au réducteur du nombre de tours (12).

4. Entraînement double de meuble électromotorisé selon l'une des revendications 1 à 4, **caractérisé en ce que** chaque logement d'interrupteur de fin de course (16) est guidé de manière coulissante dans un guidage jouxtant la paroi du boîtier.

5. Entraînement double de meuble électromotorisé selon l'une ou plusieurs des revendications précédentes, **caractérisé en ce que** l'on prévoit à l'intérieur du boîtier de l'entraînement double de meuble (10) au moins une barre de remorquage (18) suivant le mouvement linéaire de l'arbre (14).

6. Entraînement double de meuble électromotorisé selon la revendication 5, **caractérisé en ce que** la barre de remorquage (18) est munie en tant que tige plate d'au moins une rainure longitudinale, dans laquelle une nervure de guidage du logement d'interrupteur de fin de course (16) est en prise.

7. Entraînement double de meuble électromotorisé selon l'une ou plusieurs des revendications précédentes, **caractérisé en ce que** sur l'extrémité de l'arbre (14) tournant le dos au réducteur du nombre de tours (12) une glissière (15) semblable à un bloc est apposée de manière fixe.

8. Entraînement double de meuble électromotorisé selon la revendication 7, **caractérisé en ce que** la glissière semblable à un bloc (15) est réalisée en tant que corps creux.

9. Entraînement double de meuble électromotorisé selon l'une ou plusieurs des revendications précédentes, **caractérisé en ce que** la barre de remorquage (18) est fixée sur la glissière semblable à un bloc (15) et se trouve à distance des deux parois associées du boîtier.

10. Entraînement double de meuble électromotorisé selon l'une ou plusieurs des revendications précédentes, **caractérisé en ce que** la barre de remorquage (18) est fixée sur l'extrémité de l'arbre (14) tournant le dos au réducteur du nombre de tours (12).

11. Entraînement double de meuble électromotorisé selon l'une ou plusieurs des revendications précédentes, **caractérisé en ce qu'**une échelle est disposée à l'extérieur sur le boîtier latéralement à côté de la fente.

12. Entraînement double de meuble électromotorisé selon l'une ou plusieurs des revendications précédentes, **caractérisé en ce que** l'élément mené (14, 15) et/ou le boîtier est muni d'un dispositif de réglage (16), lequel est de préférence formé par un logement d'interrupteur de fin de course pouvant coulisser.

13. Entraînement double de meuble électromotorisé selon l'une ou plusieurs des revendications précédentes, **caractérisé en ce que** le dispositif de réglage (16) est librement accessible depuis le côté extérieur du boîtier et/ou est recouvert par un élément de couverture.

14. Entraînement double de meuble électromotorisé selon l'une ou plusieurs des revendications précédentes, **caractérisé en ce qu'**il est possible de régler la distance entre la surface d'arrêt et un interrupteur de fin de course arrêtant le moteur électrique dans la position d'actionnement complet et/ou la position complètement déployée de l'élément de meuble.

15. Entraînement double de meuble électromotorisé selon l'une ou plusieurs des revendications précédentes, **caractérisé en ce qu'**au moins un interrupteur de fin de course (17) est couplé avec le dispositif de réglage (16) ou bien est relié de manière serrée à celui-ci.

16. Entraînement double de meuble électromotorisé selon la revendication 15, **caractérisé en ce que** le poussoir de ce ou ces interrupteur(s) de fin de course (17) est couplé avec le dispositif de réglage (16) ou bien est relié de manière serrée à celui-ci.

17. Entraînement double de meuble électromotorisé selon l'une ou plusieurs des revendications précédentes, **caractérisé en ce que** la surface d'arrêt pour l'actionnement de ce ou ces interrupteur(s) de fin de course (17) est couplée avec au moins un dispositif de réglage (16) ou est reliée de manière serrée à celui-ci.

18. Entraînement double de meuble électromotorisé selon l'une ou plusieurs des revendications précédentes, **caractérisé en ce que** l'élément mené (14, 15) mobile linéairement est couplé avec au moins un dispositif de réglage (16) ou relié de manière serrée à celui-ci.

19. Entraînement double de meuble électromotorisé selon l'une ou plusieurs des revendications précédentes, **caractérisé en ce que** le dispositif de réglage (16) est formé par un logement d'interrupteur de fin de course avec des positions d'engrènement en conjugaison de formes.

20. Entraînement double de meuble électromotorisé selon l'une ou plusieurs des revendications précédentes, **caractérisé en ce que** le dispositif de réglage (16) est posé sur ou dans l'élément mené (14, 15), y est intégré dedans ou est couplé avec celui-ci.

21. Entraînement double de meuble électromotorisé selon l'une ou plusieurs des revendications précédentes, **caractérisé en ce que** ce ou ces interrupteur(s) de fin de course (17) est/sont disposé(s) sur une carte de circuits imprimés.

22. Entraînement double de meuble électromotorisé selon la revendication 22, **caractérisé en ce que** ce ou ces interrupteur(s) de fin de course (17) monté(s) sur la carte de circuits imprimés est/sont couplé(s) avec au moins un dispositif de réglage (16) ou bien est/sont relié(s) de manière serrée à celui-ci.
